# EUROPEAN PATENT SPECIFICATION

(11) **EP 2 903 481 B1**
(45) Date of publication and mention of the grant of the patent: **31.08.2016**
(21) Application number: 13811597.7
(22) Date of filing: 07.10.2013
(51) Int. Cl.: A47D 13/02

(54) **A CHILD CARRIER**
KINDERTRAGEVORRICHTUNG
PORTE-BÉBÉ

(30) Priority: 05.10.2012 GB 201217830; 14.01.2013 GB 201300600
(43) Date of publication of application: 12.08.2015
(73) Proprietor: Whiting, Juliette, Southampton, Hampshire SO31 9HN (GB); Cave, Sharon, Southampton, Hampshire SO31 9HN (GB)
(72) Inventor: Whiting, Juliette, Southampton, Hampshire SO31 9HN (GB); Cave, Sharon, Southampton, Hampshire SO31 9HN (GB)
(74) Representative: Robinson, Simon John
(86) International application number: PCT/GB2013/052608
(87) International publication number: WO 2014/053862

(56) References cited:
- US-A- 4 324 430
- US-A- 5 267 680
- US-A- 5 641 200
- US-A1- 2007 210 639

## Description

### Field of the Invention

The present invention relates to a child carrier and more particularly but not exclusively a child carrier for use in a car as an alternative to a child seat to serve as a safety restraint for the child.

### Background

Whilst travelling with children in a vehicle it is important that the children are correctly strapped in place.

The rules governing types of strapping provisions required for children whilst travelling vary in different countries.

In some countries a child must travel in a child seat, whereas in others a small child may be legally carried in the arms of the parent. Some countries also specify a direction in which children of certain weights or heights should face whilst travelling and in what position in the car they may be placed for example in the passenger seat or back seat therefore the equipment required may vary from place to place.

Parents or carers, or users, are always keen to provide the highest safety measures possible for their children however the varying laws in different countries may mean that they cannot always guarantee that their preferred travel arrangements will be available or that they will have the necessary equipment with them

Also when abroad and particularly when travelling, it may not always be viable or possible to carry a home-standard child seat and therefore an alternative must be sought.

The present invention therefore arose in order to overcome problems associated with travelling with children in vehicles when standardised child travel arrangements are not available, and a user desires a standardised or familiar arrangement the user can trust; particularly where no arrangements for children are not feasible or are unavailable and a user does not feel comfortable or needs reassurance.

Granted United States patent US 7 618 097 (GHATGE) discloses a vehicle seat belt guide comprising a support body having at least one anchor position and a belt diverter supported by and selectively positionable relative to the support body, said support body being of a substantially elongated form and substantially rigid, the or each said anchor position of the support body being adapted in use to engage with and be supported by a support member extending from a vehicle seat back to a headrest and said support body comprising a guide formation which extends along at least a part of the length of the elongate support body whereby, in use, and with the support body extending substantially perpendicular to the normal direction of travel of the vehicle, the seat belt diverter is movable laterally relative to the direction in which the support member extends from a vehicle seat back to a headrest, the seat belt guide further comprising clamping means to secure the belt diverter in a required position relative to the support body.

United States patent application US 3 769 938 (HUDZIAK) discloses an infant's garment having an elongated shirt like body, said shirt like body comprising a covering for the shoulders and torso of an infant including a front side and a back side, said shirt like body having a neck opening at one end and a crotch portion in the other end, manually releasable snap means joined to said other end for attaching_said crotch portion to a mating ring member that is joined to the shirt like body below said neck opening near the center of the back side of said garment, means for enlarging the neck opening to allow passage of the infant's head therethrough and for thereafter closing the neck opening, a pair of waist encircling band portions, each of said waist encircling band portions being attached to opposite sides of the front side and the back side of said garment at the central portion of said garment for securing the garment around the waist of the infant, and means comprising a pair of snap connected leashes attached to said waist encircling band portions for tying the infant in place.

Granted European patent EP 1 565 091 (BERGKVIST) discloses a child harness that includes a child carrying pouch which is positioned on the front side of the harness, so as to be supported on the chest side of the wearer, and that further includes two strap loops which pass around respective shoulders of the wearer, wherein the loops are mutually fastened by means of a fastener means on the rear side of the harness, characterised in that the strap of each loop has a longitudinally extending thickened edge on the mutually adjacent edges of the loops on the rear side of the harness; and in that the fastener means has along each of two opposite edges an undercut groove which slidingly receives a respective edge thickening of the adjacent strap loops, therewith allowing the fastener means to slide along the straps of the loops.

In contrast the present invention provides a highly portable and flexible means of providing child safety in a myriad of vehicles both with arrangements for child safety and with none, and more particularly provides a safety conscious, portable and simple-to-use alternative to a user simply holding baby on their lap whenever a dedicated infant seat is not available.

### Summary

According to the present invention there is provided a child carrier as claimed in claim 1.

The backboard may be composed of at least two layers, for example at least two plies, in order to allow the backboard to be held in use in place against the user by a car seat restraint. Said layers may be permanently or temporarily fastened together, for example wherein in some further embodiments one layer may be flexible or resiliently deformable and/or embodied in or supported by an item of clothing.

A first layer or ply or child facing portion therefore supports or comprises the harness. A second layer or ply or user facing portion of the backboard supports or comprises the at least one fastening; such that the harness is arranged in use to hold the child and the fastening is arranged in use to secure the carrier to the user, wherein said user is in use held in place in a vehicle.

The blackboard may be of thickness between 0.8cm and 1.2cm.

The child carrier enables the child to be carried in a vehicle or more particularly and additionally the carrier to be secured to the user in a vehicle, wherein said user is strapped into a standard vehicle seat restraint or seatbelt so as to enable the user to support the child in conjunction with the restraint, when travelling in a vehicle without a child seat. Therefore travelling in all vehicles may be facilitated through a standardised portable solution.

Typically the at least one fastening is separately operable to the restraint and comprises at least one strapping attached to the backboard in more than one location, which strapping is arranged in use to encircle the user. Such strapping serves as a means of helping attach the backboard and/or carrier to the user and separate operation serves to aid in or facilitate attachment of the carrier to the user, for example wherein the strapping is attached to the user prior to seating and using the restraint or wherein the child is secured into the restraint, the user sits in the seat, secures the seat restraint and subsequently operates the fastening by passing the strapping around the user and/or seat restraint.

In preferred embodiments the backboard of the child carrier is arranged in use to be positioned against the user's chest. The strapping is arranged in use to secure the backboard to the user by passing around the user's body, for example back, waist and/or legs.

In preferred embodiments the strapping can be separated for example parted, passed around the user and then fastened so as to attach the backboard to the user. The strapping is advantageously arranged to be alterable in length so as to accommodate plural user body shapes.

In some embodiments the strapping may comprise two shoulder straps with an optional waist band to secure the backboard to the user. Such multipoint strapping arrangements may include single or multiple attachment or securement to the user.

In further embodiments the fastening may encompass a means of fastening or securing the backboard or carrier to the restraint in addition or the alternative, for example wherein the fastening comprises at least one and preferably two hooks, catches or stays which stays act to fasten the restraint to the backboard or carrier.

Said stays may be affixed onto the restraint directly wherein the carrier is prevented from movement in a plurality of directions with reference to the user or restraint.

For example the stays may be arranged to fasten to at least two sections of the restraint, wherein at least one of said sections, typically uppermost and diagonal in use, may be semi-permanently fastened, and another temporary slip-over, or only when the carrier is in use, so as to secure the carrier with reference to a horizontal section.

In some embodiments the harness may be separate or separable from the backboard, for example wherein an easy securement means is provided such as click fit or at least one resiliently deformable catch. In this way the harness may be detachable from the backboard, wherein the backboard may be left in place on the restraint, typically fastened to the upper restraint section.

According to the invention the backboard is shaped so as to include a tapered lower portion arranged in use to act as a pivot point to tip the backboard forward to allow passage of the restraint and/or closure of the fastening.

The backboard is ideally, or includes, a reinforced and/or padded portion which is arranged to support the harness with child in use and is padded or deformable on both sides for comfort of the user and the child. Advantageously the backboard is also rigid where appropriate so as not to fold and crush the child should it be subjected to force from an impact. Said padding or deformation may advantageously also act to absorb pressures during impact, for example such as where the user is pressed against the backboard, for example should said backboard be primarily or solely fastened to the restraint.

In preferred embodiments the harness has five adjustable belts that each attach to a separate location on the backboard. Ideally each belt is secured to the backboard so as to provide a strong point of attachment for the harness.

Preferably the backboard is a supporting structure to which the harness is attached and includes structural reinforcement between locations of attachment.

Typically the carrier may include two belts arranged in use to pass over the child's shoulders, one for each arm, two belts secure around the child's waist and one between the child's legs. The belts may be arranged in use such that all the belts connect to one main buckle to form the harness.

In preferred embodiments the backboard further comprises a pouch. The pouch maybe a pocket with leg holes in where the child can be seated. Said pouch may be attached in use to the belts, internally or externally, permanently or temporarily. Preferably the pouch is permanently attached at least on the tapered section of the backboard allowing the pouch to flap open. This allows the pouch to be easily cleaned and the child to be easily placed into the pouch.

Typically in use the backboard may be arranged to be attached to the user by the fastening or strapping as described above. In this way in some embodiments the carrier may be able to be and desirable to be used as a standard carrier in general use.

Upon entering a vehicle, the vehicle seat restraint is subsequently positioned over the user; and in some embodiments may be passed over or through the backboard so as to connect the backboard to the restraint. In such embodiments therefore the backboard is held to the user by the strapping and the restraint when in use. In preferred embodiments the restraint is merely passed over and around the user which may be accomplished with the carrier in place, wherein for example the fastening or strapping may be displaced or detached to allow passage of the restraint in use on at least one side of the user and carrier.

In some embodiments the backboard may therefore include at least one guide loop as additional fastening to guide and secure the restraint in a preferred position. Ideally the loops may be opened to allow the restraint to pass through and then closed around the restraint to hold it in position.

In preferred embodiments the carrier includes a padded layer that covers the restraint and/or backboard in use so as to not rub or pinch the child. Ideally the layer may be removable so as to be easily washed if required and may accordingly be secured by temporary means such as press studs or poppers, buttons, zippers, or hook and loop.

In embodiments with the pouch, once the restraint is in place the pouch may then be raised from its open position and attached to the backboard. Preferably the pouch is lifted from its open position and is removably attached to the backboard by a plurality of poppers although it is envisaged that other forms of attachment such as hooks, buckles, clips, clasps or hook and loop attachment such as **Velcro** (Trade Mark) may be used.

In some countries the direction that the child should face when being transported in the vehicle is legislated.

In order therefore to accommodate both orientations said pouch may include a head support that cups or supports the back of the child's head whilst travelling seated backwards but that can be folded down and secured in place, typically by a popper, to allow space for the face of the child when travelling forwards.

Preferably the pouch is formed of a strong, durable, lightweight, breathable fabric. Ideally the pouch is padded for comfort and so as to provide support for the child but is not rigid or not wholly rigid so that the pouch may be easily displaced and/or stowed when not in use.

In some preferred embodiments the harness belts may accept or be arranged with a removable loop for holding toys so that the child can play whilst travelling. Preferably the loop may attach to the buckle or an outward facing area of the belts so as not to rub the child in use. In some embodiments the loop may encompass the harness belts.

Typically the at least one loop is openable so as to allow the attachment and removal of toys to the loop.

Some embodiments are able to be rolled or folded and therefore easily transportable, for example wherein the backboard may include living hinges and/or at least one one-way fold. For example in some embodiments the harness may be detachable from the backboard and the backboard rolled up with plural one-way folds allowing the backboard to roll up on the child face, and for example the harness or fastening being used to secure the backboard for storage or transport.

The carrier may be arranged to be placed in a stored condition which has an essentially flat or squat spatial envelope.

In preferred embodiments the backboard remains rigid where appropriate at all stages and the carrier is transported or stored in a backpack or case.

The carrier may be provided with an attachment for a strap or a (integral or removable) strap, which allows an adult to carry the child in the carrier when not in the vehicle.

The invention has been described by way of examples only and it will be appreciated that variation may be made to the above-mentioned embodiments without departing from the scope of invention.

With respect to the above description then, it is to be realised that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

### Brief Description of Figures

The drawings show one embodiment of the invention given by way of example only, in which:

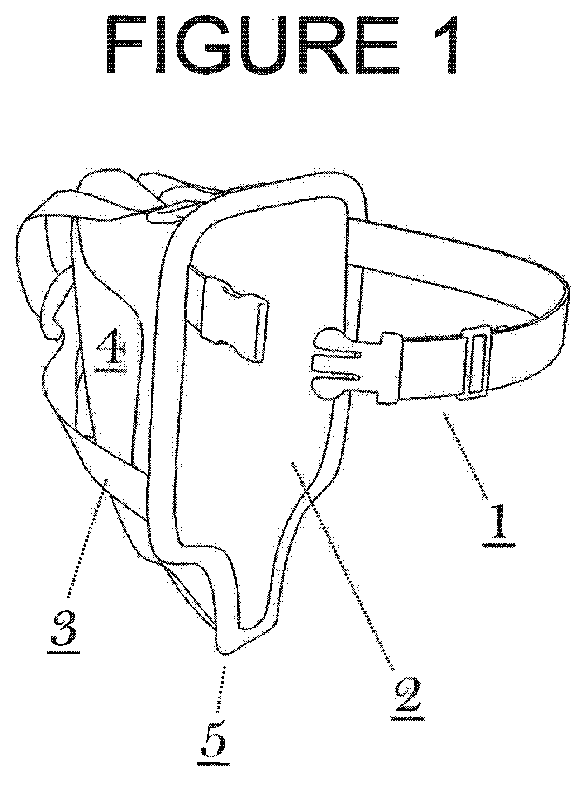

**Figure 1** shows an isometric view from rear of a preferred embodiment of the carrier; and

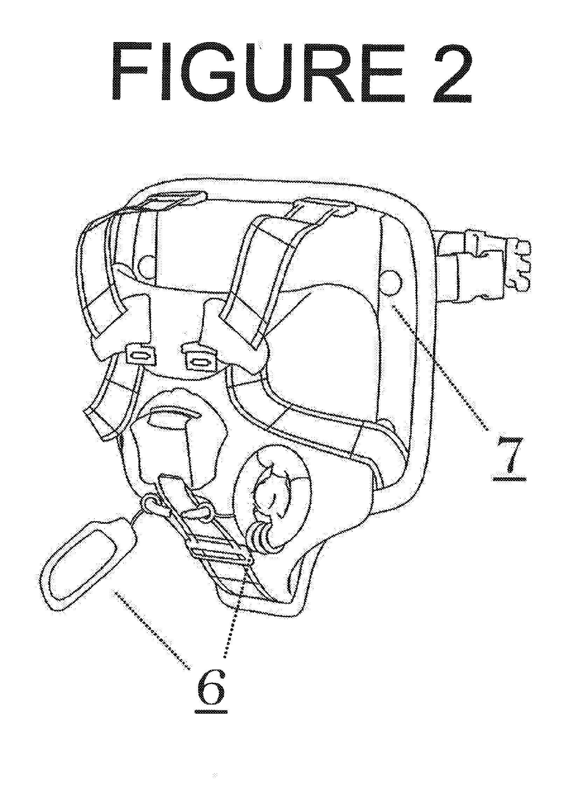

**Figure 2** shows an isometric view from front of the embodiment of Figure 1.

### Detailed Description of Figures

The pictured embodiment comes with attachment means to which toys can be connected to entertain the child to make an attractive piece of baby equipment and includes the following:
Fastening comprising strapping 1
Backboard 2
Restraint comprising belts 3
Pouch 4 stitched at bottom
Tapered lower backboard section 5
Toys 6
Poppers for restraint padding 7
Strapping length alteration means 8

## Claims

1. A child carrier for transporting a child in a car while attached to a user in a seat restraint, the child carrier comprising: a child harness mounted on a backboard (2) that is rigid at least in part, said backboard comprising at least one fastening (1) arranged in use to be capable of attaching the carrier to a user in a seat restraint, the harness comprising two belts (3) arranged in use to pass over the child's shoulders, one for each arm, and comprising two belts to secure around the child's waist, and a belt between the child's legs, wherein the backboard is shaped so as to include a tapered lower section (5) portion arranged in use to rest comfortably between a user's legs.

2. A carrier according to claim 1 wherein the fastening (1) is separately operable to the restraint and the fastening comprises strapping attached to the backboard (2) in more than one location.

3. A carrier according to claim 1 or 2 wherein the fastening (1) comprises a means of cooperating at least a part of the restraint with the carrier.

4. A carrier according to any of claims 1, 2 or 3 wherein the backboard (2) includes a padded tab that is arranged in use to cover the restraint so as to not rub or pinch the child.

5. A carrier according to any of the preceding claims further comprising a pouch (4) arranged in use to receive a child.

6. A carrier according to claim 6 wherein the pouch (4) is detachable from the backboard (2).

## Patentansprüche

1. Eine Kindertragevorrichtung für den Transport eines Kindes in einem Fahrzeug, während es an einem Nutzer in einem Kindersitz befestigt ist, die Kindertragevorrichtung weist dabei Folgendes auf: einen Kinder-Tragegurt, der an einem Rückenbrett (2) montiert ist, das zumindest teilweise starr ist, dieses Rückenbrett weist mindestens ein Befestigungselement (1) auf, das so angeordnet ist, dass es die Tragevorrichtung an einem Nutzer in einem Kindersitz befestigen kann, der Tragegurt weist dabei zwei Gurte (3) auf, die im Einsatz so angeordnet sind, dass sie über die Schultern des Kindes verlaufen, einer für jeden Arm, und weist zwei Gurte auf, die um den Bauch des Kindes verlaufen, und einen Gurt zwischen den Beinen des Kindes, wobei das Rückenbrett so geformt ist, dass es einen konisch zulaufenden unteren Abschnitt (5) einschließt, der im Einsatz so angeordnet ist, dass er bequem zwischen den Beinen des Nutzers ruht.

2. Eine Tragevorrichtung gemäß Anspruch 1, wobei das Befestigungselement (1) separat am Kindersitz bedienbar ist und das Befestigungselement eine Gurtvorrichtung aufweist, die am Rückenbrett (2) an mehr als einer Stelle befestigt ist.

3. Eine Tragevorrichtung gemäß Anspruch 1 oder 2, wobei das Befestigungselement (1) eine Vorrichtung aufweist, die zumindest an einem Teil des Kindersitzes mit dem Träger zusammenwirkt.

4. Eine Tragevorrichtung gemäß eines der Ansprüche 1, 2 oder 3, wobei das Rückenbrett (2) einen gepolsterten Streifen einschließt, der im Einsatz so angeordnet ist, dass er den Kindersitz abdeckt, damit sich das Kind nicht abscheuert oder einklemmt.

5. Eine Tragevorrichtung gemäß eines der vorhergehenden Ansprüche, die darüberhinaus eine Tasche (4) aufweist, die so angeordnet ist, dass sie ein Kind aufnehmen kann.

6. Eine Tragevorrichtung gemäß Anspruch 6, wobei die Tasche (4) vom Rückenbrett abnehmbar ist.

## Revendications

1. Un porte-bébé destiné au transport d'un enfant dans une voiture tandis qu'il est fixé à un utilisateur dans une retenue de siège, le porte-bébé comprenant : un harnais pour enfant monté sur un dossier (2) qui est rigide au moins en partie, ledit dossier comprenant au moins un dispositif de fixation (1) agencé en utilisation de façon à pouvoir attacher le porte-bébé à un utilisateur dans une retenue de siège, le harnais comprenant deux courroies (3) agencées en utilisation de façon à passer par dessus les épaules de l'enfant, une pour chaque bras, et comprenant deux courroies à fixer autour de la taille de l'enfant, et une courroie entre les jambes de l'enfant, où le dossier est façonné de façon à inclure une partie section inférieure en biseau (5) agencée en utilisation de façon à reposer confortablement entre les jambes d'un utilisateur.

2. Un porte-bébé selon la Revendication 1 où le dispositif de fixation (1) est actionnable séparément de la retenue et le dispositif de fixation comprend des sangles fixées au dossier (2) dans plus d'un emplacement.

3. Un porte-bébé selon la Revendication 1 ou 2 où le dispositif de fixation (1) comprend un moyen de faire coopérer au moins une partie de la retenue avec le porte-bébé.

4. Un porte-bébé selon l'une quelconque des Revendications 1, 2 ou 3 où le dossier (2) comprend une languette matelassée qui est agencée en utilisation de façon à couvrir la retenue de façon à ne pas frotter ni pincer l'enfant.

5. Un porte-bébé selon l'une quelconque des Revendications précédentes comprenant en outre une poche (4) agencée en utilisation de façon à recevoir un enfant.

6. Un porte-bébé selon la Revendication 6 où la poche (4) est détachable du dossier.
